# EUROPÄISCHE PATENTSCHRIFT

(11) **EP 3 768 536 B1**
(45) Veröffentlichungstag und Bekanntmachung des Hinweises auf die Patenterteilung: **26.10.2022**
(21) Anmeldenummer: 19712560.2
(22) Anmeldetag: 19.03.2019
(51) Int. Cl.: B60J 7/02, B60J 10/82, B60J 7/04, B29C 44/12

(54) **FAHRZEUGDACHDECKEL MIT EINEM RAHMENTEIL**
VEHICLE ROOF COVER HAVING A FRAME PART
PLAFOND DE TOIT DE VÉHICULE COMPRENANT UNE PARTIE DE CADRE

(30) Priorität: 23.03.2018 DE 102018002408
(43) Veröffentlichungstag der Anmeldung: 27.01.2021
(73) Patentinhaber: Webasto SE, 82131 Stockdorf (DE)
(72) Erfinder: SCHRÖFERL, Thomas, 82131 Stockdorf (DE); MIHÁL, Marcel, 82131 Stockdorf (DE)
(74) Vertreter: Fischer & Konnerth
(86) Internationale Anmeldenummer: PCT/EP2019/056779
(87) Internationale Veröffentlichungsnummer: WO 2019/179982

(56) Entgegenhaltungen:
- EP-A1- 2 528 803
- DE-A1- 10 203 846
- DE-A1-102014 114 414
- US-A1- 2010 276 969

## Beschreibung

Die Erfindung betrifft einen Deckel zum Verschließen einer Fahrzeugflächenöffnung, wobei der Deckel ein Rahmenteil aufweist, das einerseits an einem Rahmenteil-Befestigungsabschnitt mittels einer am Deckel angebrachten Kunststoffanschäumung an der Deckelunterseite befestigt ist und andererseits an einem Rahmenteil-Freiabschnitt über zumindest einen Abstandshalter die Deckelunterseite kontaktiert.

Aus der DE 10 2014 114 414 A1 ist ein gattungsgemäßer von einer Glasscheibe gebildeter Deckel bekannt geworden, der ein an der Deckelunterseite angeordnetes metallisches Träger- oder Rahmenteil aufweist, das deckelrandseitig in einer Kunststoffumschäumung eingebettet und somit am Deckel befestigt ist. Zwischen einem deckeleinwärtigen Abschnitt des Rahmenteils, der sich außerhalb der Kunststoffumschäumung befindet und der einen nach unten gebogenen Schenkel zur Ankoppelung z. B. einer Betätigungsmechanik des Deckels aufweist, und dem Deckel ist ein Abstandshalter vorgesehen, der die Übertragung von Vibrationen zwischen dem Rahmenteil und dem Deckel verhindern soll. Der Abstandshalter ist von einer Kunststoffschicht oder einer Kunststoffraupe gebildet, die mittels einer Auftragsvorrichtung auf das Rahmenteil und/oder den Deckel aufgebracht wird, bevor das Rahmenteil und der Deckel in einem Schäumwerkzeug unter Zwischenlage des oder der Abstandhalter aufgenommen und mit der Kunststoffumschäumung umspritzt oder umschäumt werden.

Ein Nachteil bei der Herstellung dieses Deckels liegt darin, dass beim Handhaben des Rahmenteils und beim Einlegen in das Schäumwerkzeug die Kunststoffraupe andere Bauteile verschmutzen kann oder selbst verdrückt und in ihrer erforderlichen Konfiguration beeinträchtigt werden kann.

Der Erfindung liegt daher die Aufgabe zugrunde, einen eingangs genannten Deckel zu schaffen, der hinsichtlich der Anbringung des Rahmenteils an dem Deckel verbessert ist.

Diese Aufgabe wird bei dem eingangs genannten Deckel erfindungsgemäß dadurch gelöst, dass das Rahmenteil an seinem Rahmenteil-Freiabschnitt zumindest eine Befüllöffnung zum Einbringen eines den Abstandshalter bildenden reaktionsfähigen Kunststoffmaterials enthält und dass das durch die Befüllöffnung in einen Spalt zwischen dem Rahmenteil-Freiabschnitt des am Deckel befestigten Rahmenteils und der Deckelunterseite eingebrachte Kunststoffmaterial nach seinem Ausreagieren oder Aushärten als Abstandshalter den Rahmenteil-Freiabschnitt an der Deckelunterseite positioniert und/oder fixiert hält.

Vorteilhafte Ausgestaltungen der Erfindung sind in den abhängigen Ansprüchen angegeben.

Da bei dem erfindungsgemäßen Deckel die Herstellung des Abstandshalters nach dem Anbringen des Rahmenteils mittels der Anschäumung am Deckel erfolgt, ist die Handhabung des Rahmenteils, das noch kein empfindliches reaktives Kunststoffmaterial enthält, beim Einlegen in das Schäumwerkzeug vereinfacht.

Der Rahmenteil-Freiabschnitt, an dem der zumindest eine Abstandshalter gebildet und angebracht wird, ist der sich deckeleinwärts vom äußeren oder außenrandseitigen Rahmenteil-Befestigungsabschnitt, der in der Anschäumung eingebettet ist, und damit außerhalb der Anschäumung erstreckende Abschnitt des Rahmenteils. Der Abstandshalter unterdrückt oder verhindert Schwingungen oder Vibrationen dieses insbesondere ansonsten mit dem Deckel nicht direkt verbundenen Rahmenteil-Freiabschnitts relativ zum Deckel. Der Abstandshalter ist zu diesem Zweck dafür vorgesehen, den Rahmenteil-Freiabschnitt an der Deckelunterseite zu positionieren und insbesondere in seiner Stellung zu halten, wenn der Deckel durch Krafteinwirkung oder Belastung gegen den Rahmenteil-Freiabschnitt gedrückt wird. Der Abstandshalter kann den Rahmenteil-Freiabschnitt auch derart an der Deckelunterseite fixieren, z. B. durch Klebverbindung, dass sich der Rahmenteil-Freiabschnitt von der Deckelunterseite nicht entfernen kann.

Das den Abstandshalter bildende Kunststoffmaterial wird in bevorzugt zähplastischem reaktionsfähigem Zustand z. B. mittels einer Düse in einfacher Weise durch die jeweilige Befüllöffnung in derjenigen Menge in den Spalt eingebracht, die eine für die jeweilige Höhe des Spaltes ausreichende Größe des Abstandshalters gewährleistet. Das zugeführte oder eingespritzte Kunststoffmaterial breitet sich in und hinter der Befüllöffnung aus und legt sich sowohl an die Deckelinnenseite wie auch an das Rahmenteil bzw. den Rahmenteil-Freiabschnitt an.

Das Kunststoffmaterial ist beispielsweise ein Klebstoff, ein Schäumwerkstoff oder ein Spritzwerkstoff. Der Abstandshalter kann in Abhängigkeit von dem verwendeten Kunststoffmaterial nach dessen Ausreagieren oder Aushärten eine gewisse Klebefähigkeit aufweisen, so dass er am Deckel wie auch am Rahmenteil-Freiabschnitt anhaftet oder anklebt. Andererseits kann der Abstandshalter an der Befüllöffnung derart gebildet sein, dass er daran ohne Klebeverbindung nur formschlüssig gehalten ist, wobei er jedoch, falls gewünscht, zusätzlich auch anhaften kann.

Zweckmäßigerweise hält somit der Abstandshalter das Rahmenteil bzw. den Rahmenteil-Freiabschnitt in demjenigen Abstand von der Deckelinnen- oder Deckelunterseite, der durch die Stellung des Rahmenteils aufgrund seiner Befestigung mittels der Anschäumung vorgegeben ist.

Der Abstandshalter ist erfindungsgemäß punktuell oder länglich oder raupenförmig gebildet.

Der Abstandshalter kann an der beispielsweise runden Befüllöffnung punktuell gebildet sein. Die Befüllöffnung kann auch länglich und insbesondere als Langloch gebildet sein, so dass der Abstandshalter auch dementsprechend länglich oder raupenförmig gebildet sein kann. Grundsätzlich sind im Wesentlichen beliebige Öffnungsquerschnitte für die Befüllöffnungen geeignet. Insbesondere füllt das zugeführte Kunststoffmaterial nur einen die Befüllöffnung eng umgebenden Bereich. Eine weitreichende und den Rahmenteil-Freiabschnitt großflächige Befestigung an der Deckelinnenseite ist zweckmäßigerweise nicht vorgesehen, da zur Vermeidung von Vibrationen eine begrenzte Größe und Erstreckung des Kunststoffmaterials bzw. des Abstandshalters ausreichend ist. Damit ist eine geringe Menge an Kunststoffmaterial ausreichend.

Zweckmäßigerweise können am Rahmenteil bzw. dem Rahmenteil-Freiabschnitt mehrere Befüllöffnungen vorgesehen sein, die beispielsweise auf gerader Linie voneinander beabstandet angeordnet sind oder auch in einer davon abweichenden Anordnung, die z. B. der Form des Rahmenteils folgen kann. Dabei können gleichartige oder auch z. B. hinsichtlich der Größe und/oder der Form unterschiedlich gestaltete Befüllöffnungen vorgesehen sein.

Gemäß einer bevorzugten Ausführungsform ist vorgesehen, dass die Befüllöffnung in einer sich von der Deckelunterseite entfernenden Vertiefung oder Ausbauchung des Rahmenteil-Freiabschnitts gebildet ist. Die Vertiefung kann bei einem geringen Abstand oder Spalt zwischen dem Rahmenteil-Freiabschnitt und der Deckelinnenseite eine insbesondere hinsichtlich der Spaltdicke ausreichende Menge an Kunststoffmaterial zur Bildung des Abstandshalters aufnehmen und dieses insbesondere seitlich begrenzen. Die Vertiefung ist zweckmäßigerweise an die Form der Befüllöffnung angepasst und weist z. B. eine runde Form auf, kann aber auch eine längliche oder rinnenartige Gestalt aufweisen und ein insbesondere längliches Reservoir für das Kunststoffmaterial bilden. Mehrere einzelne Vertiefungen können entsprechend der Positionen mehrerer Befüllöffnungen an dem Rahmenteil vorgesehen sein.

Der Abstandshalter kann aus einer Lage des Kunststoffmaterials oder aus mehreren Lagen des Kunststoffmaterials gebildet sein. Ein mehrlagiger Aufbau des Abstandshalters kann gleiche oder unterschiedliche Kunststoffmaterialien kombinieren und spezielle Gestaltungen des Abstandshalters ermöglichen.

Das Rahmenteil kann insbesondere in Rahmenlängsrichtung mehrere Rahmenteil-Freiabschnitte mit jeweils zumindest einer Befüllöffnung aufweisen. Zweckmäßigerweise bildet das Rahmenteil jeweils eine der beiden sich gegenüber liegenden Längsseiten eines an der Deckelunterseite angebrachten insbesondere aus metallischem Werksstoff hergestellten Verstärkungs- oder Deckelrahmens. Jedoch kann das Rahmenteil auch andere Abschnitte eines Deckelrahmens wie z. B. die Querabschnitte des Deckelrahmens bilden.

Zweckmäßigerweise enthält das Rahmenteil, insbesondere an einem Steg des Rahmenteil-Freiabschnitts, eine Lageraufnahme für eine Verstelleinrichtung des Deckels. Der Deckel ist insbesondere ein Deckel eines öffnungsfähigen Fahrzeugdaches wie eines Schiebe-Hebe-Daches oder eines Spoilerdaches, kann aber auch zum Schließen einer Fensteröffnung oder einer Heckscheibenöffnung oder dergleichen vorgesehen sein.

Nachfolgend wird die Erfindung anhand eines Ausführungsbeispiels eines erfindungsgemäßen Deckels unter Bezugnahme auf die Zeichnung näher erläutert. Es zeigt:

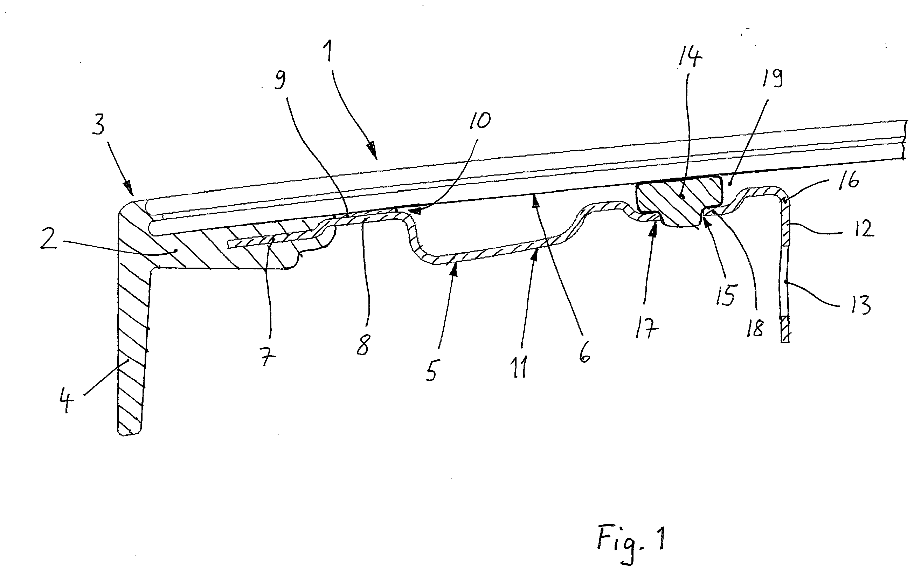

- Fig. 1: in einer Querschnittansicht einen seitlichen Abschnitt eines Deckels eines Fahrzeugdaches mit einem an der Deckelunterseite angebrachten Rahmenteil;

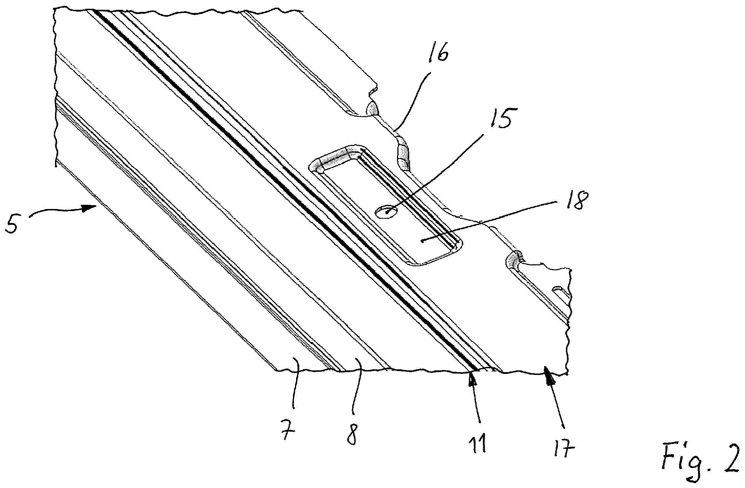

- Fig. 2: in einer isometrischen Ansicht einen Abschnitt des Rahmenteils; und
- Fig. 3: in einer isometrischen Ansicht eine Unteransicht eines Deckelrahmens des Deckels, der an seinen beiden seitlichen Längsrahmenabschnitten jeweils ein Rahmenteil aufweist.

Ein Deckel 1 eines öffnungsfähigen Fahrzeugdaches eines Fahrzeugs wie z. B. eines Personenkraftwagens ist beispielsweise zum Verschließen einer Dachöffnung vorgesehen und kann aus einer die Dachöffnung verschließenden Schließstellung angehoben und z. B. zumindest in eine Lüftungsstellung verstellt oder ausgeschwenkt werden. Der Deckel 1 ist beispielsweise ein Deckel eines Schiebehebedaches, eines Spoilerdaches oder eines außengeführten Schiebedaches und er ist insbesondere ein Glasdeckel oder aus einem transparenten Kunststoff hergestellt.

Der Deckel 1 weist randseitig eine Anschäumung 2 als Kunststoffrahmen oder Kunststoffeinfassung auf, die insbesondere aus Polyurethan (PU) gebildet ist, am Deckel 1 bevorzugt umlaufend gebildet ist und an jedem der beiden längs verlaufenden Seitenrändern 3 des Deckels 1 zweckmäßigerweise mit einer nach unten abstehenden Blende 4 gebildet ist.

Ein längliches Rahmenteil 5 ist an der Deckelinnen- oder Deckelunterseite 6 einwärts vom seitlichen Deckelrand 3 und entlang dem Deckelrand 3 verlaufend angeordnet. Ein außenseitiger Rahmenteil-Befestigungsabschnitt 7 des Rahmenteils 5 ist in der Anschäumung 2 eingebettet und mittels der Anschäumung 2 an der Deckelunterseite 6 befestigt. Ein Anlageabschnitt 8 des Rahmenteils 5 schließt sich in Querrichtung einwärts an den Rahmenteil-Befestigungsabschnitt 7 an und liegt unter Zwischenlage einer Dichtung 9 wie z. B. einer Moosgummischicht an der Deckelunterseite 6 an. Die Dichtung 9 dichtet im Schäumwerkzeug beim Schäumen der Anschäumung 2 einen schmalen Spalt 10 zwischen dem Anlageabschnitt 8 und der Deckelunterseite 6 ab und verhindert damit ein Austreten von Schaum der Anschäumung 2 durch diesen Spalt 10.

Weiterhin weist das Rahmenteil 5 anschließend an den Anlageabschnitt 8 einen Rahmenteil-Freiabschnitt 11 auf, der zweckmäßigerweise von der Deckelinnenseite 6 beabstandet ist und der vorzugsweise in einem Steg 12 endet, der sich vom Deckel 1 weg gerichtet erstreckt und an dem eine Aufnahme 13 wie beispielsweise eine Öffnung für eine Lager- oder Betätigungseinrichtung des Deckels 1 wie z. B. eine Ausstellmechanik gebildet ist.

Am Rahmenteil 5 ist zumindest ein Abstandshalter 14 vorgesehen, der den Rahmenteil-Freiabschnitt 11 des Rahmenteils 5 zur Deckelunterseite 6 hin beabstandet hält. Der Abstandshalter 14 ist einerseits im Bereich einer Befüllöffnung 15 des Rahmenteils 5 angeordnet, die bevorzugt nahe dem Innenrand 16 des Rahmenteils 5 in einem Abstandshalter-Rahmenabschnitt 17 angeordnet ist, der von der Deckelunterseite 6 beabstandet ist. Die Befüllöffnung 15 ist z. B. rund oder in Längsrichtung des Rahmenteils 5 länglich gebildet und z. B. in einer runden oder länglichen Vertiefung 18 des Rahmenteils 5 bzw. des Abstandshalter-Rahmenabschnitts 17 angeordnet, die als sich von der Deckelunterseite 6 entfernende Ausbauchung gebildet ist. Der Abstandshalter 14 ist ein Kunststoffteil, das aus einem Kunststoffmaterial wie z. B. aus Polyurethan oder einem Klebstoff geschäumt oder gespritzt wird. Der Abstandshalter 14 wird durch Einbringen oder Einspritzen von Kunststoffmasse oder Klebstoff durch die Befüllöffnung 15 in einem Spalt 19 zwischen dem Rahmenteil 5 und der Deckelunterseite 6 gebildet. Das eingebrachte reaktive Kunststoffmaterial legt sich an die Deckelinnenseite 6 und den Abstandshalter-Rahmenabschnitt 17 an und füllt die Vertiefung 18 teilweise, weitgehend oder vollständig aus. Die Vertiefung 18 begrenzt somit das Ausbreiten des eingebrachten Kunststoffmaterials. Nach dem Ausreagieren oder Aushärten des Kunststoffmaterials wird in Abhängigkeit des verwendeten Kunststoffmaterials der Abstandshalter 14 formschlüssig an der Befüllöffnung 15 gehalten und er kann zusätzlich bei entsprechender Klebeeigenschaft des Kunststoffmaterials an der Deckelinnenseite 6 und dem Abstandshalter-Rahmenabschnitt 17 anhaften oder daran verklebt sein. Der Abstandshalter 14 dämpft Vibrationen des Rahmenteil-Freiabschnitts 11 relativ zum Deckel 1 oder vermeidet das Auftreten solcher Vibrationen.

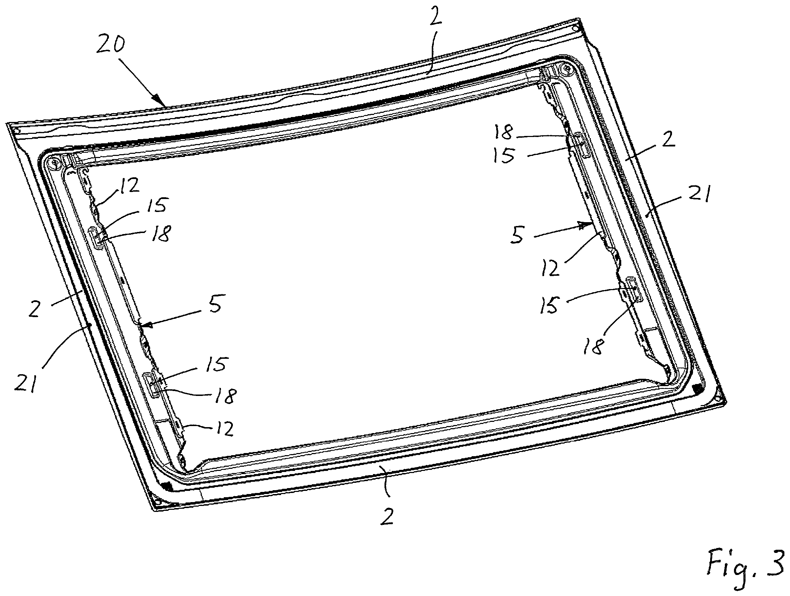

Fig. 3 zeigt die Anschäumung 2 in Gestalt eines Kunststoffrahmens 20, der an der Deckelinnen- oder Deckelunterseite 6 des nicht dargestellten Deckels 1 umlaufend angeformt ist und an dessen beiden Längsabschnitten 21 jeweils das Rahmenteil 5 befestigt ist. Jedes Rahmenteil 5 weist in diesem Ausführungsbeispiel zwei Befüllöffnungen 15 in zugeordneten Vertiefungen 18 auf. Die insbesondere aus metallischem Werkstoff hergestellten Rahmenteile 5 können für sich alleine in den Kunststoffrahmen 20 integriert sein oder sie sind Teile oder Abschnitte eines umlaufenden Verstärkungsrahmens.

Die in der Beschreibung und anhand des Ausführungsbeispiels sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Deckel | 12 | Steg |
| 2 | Anschäumung | 13 | Aufnahme |
| 3 | Seitenrand | 14 | Abstandshalter |
| 4 | Blende | 15 | Befüllöffnung |
| 5 | Rahmenteil | 16 | Innenrand |
| 6 | Deckelunterseite | 17 | Abstandshalter- |
| 7 | Rahmenteil- | | Rahmenabschnitt |
| | Befestigungsabschnitt | 18 | Vertiefung |
| 8 | Anlageabschnitt | 19 | Spalt |
| 9 | Dichtung | 20 | Kunststoffrahmen |
| 10 | Spalt | 21 | Längsabschnitt |
| 11 | Rahmenteil-Freiabschnitt | | |

## Patentansprüche

1. Deckel (1) zum Verschließen einer Fahrzeugflächenöffnung, wobei der Deckel (1) ein Rahmenteil (5) aufweist, das einerseits an einem Rahmenteil-Befestigungsabschnitt (7) mittels einer am Deckel (1) angebrachten Kunststoffanschäumung (2) an der Deckelunterseite (6) befestigt ist und andererseits an einem Rahmenteil-Freiabschnitt (11) über zumindest einen Abstandshalter (14) die Deckelunterseite (6) kontaktiert,
wobei der Abstandshalter (14) punktuell oder länglich oder raupenförmig gebildet ist, **dadurch gekennzeichnet, dass** das Rahmenteil (5) an seinem Rahmenteil-Freiabschnitt (11) zumindest eine Befüllöffnung (15) zum Einbringen eines den Abstandshalter (14) bildenden reaktionsfähigen Kunststoffmaterials enthält, wobei das durch die Befüllöffnung (15) in einen Spalt (19) zwischen dem Rahmenteil-Freiabschnitt (11) des am Deckel (1) befestigten Rahmenteils (5) und der Deckelunterseite (6) eingebrachte Kunststoffmaterial nach seinem Ausreagieren oder Aushärten als Abstandshalter (14) den Rahmenteil-Freiabschnitt (11 ) an der Deckelunterseite (6) positioniert und/oder fixiert hält.

2. Deckel nach Anspruch 1,
**dadurch gekennzeichnet, dass** der Abstandshalter (14) nur in einem die Befüllöffnung (15) eng umgebenden Bereich gebildet ist.

3. Deckel nach Anspruch 1 oder 2,
**dadurch gekennzeichnet, dass** der Abstandshalter (14) den Rahmenteil-Freiabschnitt (11) von der Deckelunterseite (6) beabstandet hält.

4. Deckel nach einem der Ansprüche 1 bis 3,
**dadurch gekennzeichnet, dass** der Abstandshalter (14) aus einer Lage des Kunststoffmaterials oder aus mehreren Lagen des Kunststoffmaterials gebildet ist.

5. Deckel nach einem der Ansprüche 1 bis 4,
**dadurch gekennzeichnet, dass** das Kunststoffmaterial ein Klebstoff, ein Schäumwerkstoff oder ein Spritzwerkstoff ist.

6. Deckel nach einem der Ansprüche 1 bis 5,
**dadurch gekennzeichnet, dass** die Befüllöffnung (15) in einer sich von der Deckelunterseite (6) entfernenden Vertiefung (18) des Rahmenteil-Freiabschnitts (11) gebildet ist.

7. Deckel nach Anspruch 6,
**dadurch gekennzeichnet, dass** die Vertiefung (18) ein insbesondere längliches Reservoir für das Kunststoffmaterial bildet.

8. Deckel nach Anspruch 6 oder 7,
**dadurch gekennzeichnet, dass** die Vertiefung (18) eine Begrenzung für das den Abstandhalter (14) bildende Kunststoffmaterial darstellt.

9. Deckel nach einem der Ansprüche 1 bis 8,
**dadurch gekennzeichnet, dass** der Abstandshalter (14) an der Befüllöffnung (15) formschlüssig gehalten ist.

10. Deckel nach einem der Ansprüche 1 bis 9,
**dadurch gekennzeichnet, dass** der Abstandshalter (14) ein Dämpfungselement zur Vibrationsdämpfung des Rahmenteil-Freiabschnitts (11) ist.

11. Deckel nach einem der Ansprüche 1 bis 10,
**dadurch gekennzeichnet, dass** der Rahmenteil-Freiabschnitt (11) ohne Befestigungsverbindung zur Deckelunterseite (6) ist.

12. Deckel nach einem der Ansprüche 1 bis 11,
**dadurch gekennzeichnet, dass** das Rahmenteil (5) insbesondere in Rahmenlängsrichtung mehrere Rahmenteil-Freiabschnitte (11) mit jeweiligen Befüllöffnungen (15) aufweist.

13. Deckel nach einem der Ansprüche 1 bis 12,
**dadurch gekennzeichnet, dass** das Rahmenteil (5) jeweils eine der beiden sich gegenüber liegenden Längsabschnitte (21) eines an der Deckelunterseite (6) angebrachten Deckelrahmens bildet.

14. Deckel nach einem der Ansprüche 1 bis 13,
**dadurch gekennzeichnet, dass** das Rahmenteil (5) eine Lageraufnahme (13) für eine Verstelleinrichtung des Deckels (1) aufweist und der Deckel (1) insbesondere ein Deckel (1) eines öffnungsfähigen Fahrzeugdaches wie eines Schiebe-Hebe-Daches oder eines Spoilerdaches ist.

## Claims

1. Cover (1) for closing a vehicle surface opening, wherein the cover (1) has a frame part (5) which, on one side, is fixed to the cover bottom side (6) at a frame part fixing portion (7) by means of a plastic foamed-on structure (2) which is attached to the cover (1) and, on the other side, makes contact with the cover bottom side (6) at a frame part free portion (11) via at least one spacer (14), wherein the spacer (14) is formed as punctiform or elongate or as a bead, **characterized in that**, on its frame part free portion (11), the frame part (5) contains at least one filling opening (15) for the introduction of a reactive plastic material which forms the spacer (14), wherein, after it has been fully reacted or cured, the plastic material, which has been introduced through the filling opening (15) into a gap (19) between the frame part free portion (11) of the frame part (5) fixed to the cover (1) and the cover bottom side (6), holds the frame part free portion (11) in a positioned and/or fixed manner on the cover bottom side (6) as a spacer (14).

2. Cover according to Claim 1,
**characterized in that** the spacer (14) is formed only in a region closely surrounding the filling opening (15).

3. Cover according to Claim 1 or 2,
**characterized in that** the spacer (14) holds the frame part free portion (11) at a spacing from the cover bottom side (6).

4. Cover according to one of Claims 1 to 3, **characterized in that** the spacer (14) is formed from a layer of the plastic material or from multiple layers of the plastic material.

5. Cover according to one of Claims 1 to 4, **characterized in that** the plastic material is an adhesive, a foam material or an injection moulded material.

6. Cover according to one of Claims 1 to 5, **characterized in that** the filling opening (15) is formed in a depression (18), that is remote from the cover bottom side (6), of the frame part free portion (11) .

7. Cover according to Claim 6,
**characterized in that** the depression (18) forms an in particular elongate reservoir for the plastic material.

8. Cover according to Claim 6 or 7,
**characterized in that** the depression (18) constitutes a boundary for the plastic material forming the spacer (14) .

9. Cover according to one of Claims 1 to 8, **characterized in that** the spacer (14) is held in a form-fitting manner at the filling opening (15).

10. Cover according to one of Claims 1 to 9, **characterized in that** the spacer (14) is a damping element for damping vibrations of the frame part free portion (11).

11. Cover according to one of Claims 1 to 10, **characterized in that** the frame part free portion (11) does not have a fixing connection to the cover bottom side (6).

12. Cover according to one of Claims 1 to 11, **characterized in that**, in particular in the longitudinal direction of the frame, the frame part (5) has multiple frame part free portions (11) with respective filling openings (15).

13. Cover according to one of Claims 1 to 12, **characterized in that** the frame part (5) forms respectively one of the two oppositely situated longitudinal portions (21) of a cover frame which is attached to the cover bottom side (6).

14. Cover according to one of Claims 1 to 13, **characterized in that** the frame part (5) has a mounting receptacle (13) for an adjusting device of the cover (1) and the cover (1) is in particular a cover (1) of an openable vehicle roof, such as a tilt-and-slide roof or a spoiler roof.

## Revendications

1. Couvercle (1) permettant de fermer une ouverture de surface de véhicule, le couvercle (1) présentant une partie de cadre (5) qui est d'une part, au niveau d'une section de fixation de partie de cadre (7), fixée à la face inférieure de couvercle (6) au moyen d'un élément en matière plastique expansée (2) agencé sur le couvercle (1), et qui entre d'autre part, au niveau d'une section libre de partie de cadre (11), en contact avec la face inférieure de couvercle (6) par l'intermédiaire d'au moins une pièce d'écartement (14), la pièce d'écartement (14) étant formée de manière ponctuelle ou allongée ou en forme de chenille,
**caractérisé en ce que** la partie de cadre (5) comporte au niveau de sa section libre de partie de cadre (11) au moins une ouverture de remplissage (15) pour introduire de la matière plastique réactive formant la pièce d'écartement (14), dans lequel, la matière plastique introduite à travers l'ouverture de remplissage (15) dans une fente (19) entre la section libre de partie de cadre (11) de la partie de cadre (5) fixée au couvercle (1) et la face inférieure de couvercle (6) maintient en position et/ou fixée la section libre de partie de cadre (11) sur la face inférieure de couvercle (6) en tant que pièce d'écartement (14) après avoir réagi ou durci.

2. Couvercle selon la revendication 1, **caractérisé en ce que** la pièce d'écartement (14) n'est formée que dans une zone entourant de près l'ouverture de remplissage (15) .

3. Couvercle selon la revendication 1 ou 2, **caractérisé en ce que** la pièce d'écartement (14) maintient la section libre de partie de cadre (11) à distance de la face inférieure de couvercle (6).

4. Couvercle selon l'une quelconque des revendications 1 à 3, **caractérisé en ce que** la pièce d'écartement (14) est formée par une couche de la matière plastique ou par plusieurs couches de la matière plastique.

5. Couvercle selon l'une quelconque des revendications 1 à 4, **caractérisé en ce que** la matière plastique est un adhésif, un matériau expansé ou un matériau de pulvérisation.

6. Couvercle selon l'une quelconque des revendications 1 à 5, **caractérisé en ce que** l'ouverture de remplissage (15) est formée dans un creux (18), s'éloignant de la face inférieure de couvercle (6), de la section libre de partie de cadre (11).

7. Couvercle selon la revendication 6, **caractérisé en ce que** le creux (18) forme un réservoir, en particulier allongé, pour la matière plastique.

8. Couvercle selon la revendication 6 ou 7, **caractérisé en ce que** le creux (18) est une limite pour la matière plastique formant la pièce d'écartement (14) .

9. Couvercle selon l'une quelconque des revendications 1 à 8, **caractérisé en ce que** la pièce d'écartement (14) est maintenue par complémentarité de forme au niveau de l'ouverture de remplissage (15).

10. Couvercle selon l'une quelconque des revendications 1 à 9, **caractérisé en ce que** la pièce d'écartement (14) est un élément amortisseur pour amortir des vibrations de la section libre de partie de cadre (11).

11. Couvercle selon l'une quelconque des revendications 1 à 10, **caractérisé en ce que** la section libre de partie de cadre (11) ne dispose d'aucune liaison de fixation avec la face inférieure de couvercle (6).

12. Couvercle selon l'une quelconque des revendications 1 à 11, **caractérisé en ce que** la partie de cadre (5), en particulier dans la direction longitudinale de cadre, présente plusieurs sections libres de partie de cadre (11) avec des ouvertures de remplissage (15) respectives.

13. Couvercle selon l'une quelconque des revendications 1 à 12, **caractérisé en ce que** la partie de cadre (5) forme respectivement l'une des deux sections longitudinales (21) opposées d'un cadre de couvercle agencé au niveau de la face inférieure de couvercle (6).

14. Couvercle selon l'une quelconque des revendications 1 à 13, **caractérisé en ce que** la partie de cadre (5) présente un logement d'appui (13) pour un dispositif de réglage du couvercle (1), et le couvercle (1) est en particulier un couvercle (1) d'un toit ouvrant de véhicule, tel qu'un toit ouvrant de véhicule coulissant et relevable ou un toit de spoiler.
